# EUROPEAN PATENT APPLICATION

(11) **EP 1 686 212 A1**
(43) Date of publication of application: **02.08.2006**
(21) Application number: 04787978.8
(22) Date of filing: 22.09.2004
(51) Int. Cl.: D07B 5/00

(54) **RUBBER REINFORCING CORD, METHOD OF PRODUCING THE CORD, AND RUBBER PRODUCT USING THE CORD**

(30) Priority: 25.09.2003 JP 2003332988
(71) Applicant: Nippon Sheet Glass Co.,Ltd., Tokyo 105-8552 (JP)
(72) Inventor: KAJIHARA, Keisuke, c/o Nippon Sheet Glass Co. Ltd., Tokyo 1058552 (JP)
(74) Representative: Intes, Didier Gérard André
(86) International application number: PCT/JP2004/013795
(87) International publication number: WO 2005/031063

(57) **Abstract**

A method of the present invention that is used for manufacturing a reinforcing cord for rubber reinforcement includes: (i) forming second strands each of which is formed by twisting a plurality of first strands together in a first direction, with the first strands including glass filaments as reinforcing fibers; (ii) forming a cord including a plurality of second strands and a treatment agent that has been applied to the second strands, with the plurality of second strands having been twisted together in the same direction as the first direction; and (iii) bonding the second strands to each other by solidifying the treatment agent, with a tensile load of 40 to 800 N per 1 mm² of the sectional area of the glass filaments being applied to the cord.

## Description

### Technical Field

The present invention relates to a reinforcing cord for reinforcing rubber, a method of manufacturing the same, and a rubber product including the same.

### Background Art

Reinforcing cords produced using reinforcing fibers such as glass fibers and aramid fibers have been used as reinforcing materials of rubber products such as rubber belts, tires, etc. Reinforcing cords for rubber reinforcement are required to have high bending fatigue resistance (flexibility in bending), high strength, high dimensional stability, etc. Particularly, rubber products such as rubber belts are subjected to bending stress repeatedly and thereby the performance thereof tends to deteriorate due to bending fatigue. Such deterioration in performance tends to cause separation between a reinforcing material and a rubber matrix, or deterioration in strength due to fraying of the reinforcing fibers. Accordingly, it is important for the reinforcing cords for rubber reinforcement to have high bending fatigue resistance.

Generally, in order to improve the bending fatigue resistance, it is indispensable to add twists to strands. With respect to the methods for adding primary twists and final twists to strands, various methods have been proposed conventionally.

The techniques for adding primary twists and final twists to strands include two kinds of lays, i.e. normal lay and Lang's lay. In the normal lay, the direction of the primary twist is different from that of the final twist. On the other hand, in the Lang's lay, the direction of the primary twist is the same as that of the final twist. The Lang's lay has an advantage in allowing a cord to have increased bending fatigue resistance due to its lower bending stress and higher flexibility as compared to those of the normal lay. Hence, the Lang's lay often is employed for twisted cords to be produced using, for example, organic fibers.

Furthermore, a toothed belt has been disclosed that is produced using a Lang's-lay glass fiber rope obtained by bundling and primarily twisting a plurality of strands of glass fibers and then bundling and finally twisting a plurality of strands primarily twisted as in the above, in the same direction as that of the primary twist (JP59(1984)-15780U).

When a glass fiber cord is allowed to have the Lang's lay, it has a considerably improved bending fatigue resistance theoretically. However, since the direction of the primary twist is the same as that of the final twist, the cord tends to be untwisted and to be entangled spontaneously. The untwisting of the cord indicates that for instance, when a cord is embedded, in the shape of a coil, in rubber that is in the form of an endless belt, the cord is untwisted around each end thereof and thereby the bundled state of strands loosens. On the other hand, the spontaneous entanglement of the cord means that one cord is entangled with itself as if it is twisted together, and thereby nodes are formed. The untwisting and spontaneous entanglement of the cord cause, for instance, gaps to be formed between strands or the respective strands to be displaced from their proper positions where they should be positioned. When the displacement of the strands occurs, load concentrates on that part during the use of the product, which causes fraying locally. This, in turn, causes the breakage of the filaments, strands, and cord.

As described above, it has been considered that glass fiber cords having Lang's lay do not exhibit high bending fatigue resistance practically and therefore are not suitable for the use for rubber products such as rubber belts that are subjected to heavy bending stress.

### Disclosure of Invention

With consideration given to the above, one of the objects of the present invention is to provide a reinforcing cord for rubber reinforcement having Lang's lay that does not untwist or entangle spontaneously much and that is excellent in tensile strength and bending fatigue resistance, and to provide a method of manufacturing the same. Moreover, another object of the present invention is to provide a rubber product including a reinforcing cord for rubber reinforcement of the present invention.

In order to achieve the above mentioned objects, a method of manufacturing a reinforcing cord for rubber reinforcement of the present invention includes:
(i) forming second strands, each of which is formed by twisting a plurality of first strands together in a first direction, with the plurality of first strands including glass filaments as reinforcing fibers;
(ii) forming a cord including a plurality of second strands mentioned above and a treatment agent that has been applied to the second strands, with the plurality of second strands having been twisted together in the same direction as the first direction; and
(iii) bonding the second strands to each other by solidifying the treatment agent, with a tensile load of 40 to 800 N per 1 mm² of the sectional area of the glass filaments being applied to the cord.

The reinforcing cord for rubber reinforcement of the present invention is a cord that is manufactured by the manufacturing method of the present invention.

Furthermore, the rubber product of the present invention is one reinforced with the reinforcing cord for rubber reinforcement of the present invention.

The present invention makes it possible to prevent the occurrence of untwisting and spontaneous entanglement that are peculiar to glass fiber cords having Lang's lay, and thereby to obtain a reinforcing cord for rubber reinforcement that is excellent in tensile strength and bending fatigue resistance. Since the rubber product of the present invention is manufactured using the reinforcing cord for rubber reinforcement of the present invention, it also is excellent in tensile strength and bending fatigue resistance.

### Brief Description of Drawings

FIG. 1 is a perspective view that schematically shows an example of rubber product of the present invention.
FIG. 2 is a sectional view that schematically shows a reinforcing cord for rubber reinforcement produced in Examples.
FIG. 3 is a schematic view showing a method of the bending test performed in Examples.

### Description of the Invention

Hereinafter, an embodiment of the present invention is described.

In the manufacturing method of the present invention, second strands each of which are formed by twisting a plurality of first strands together in a first direction. In other words, the plurality of first strands are primarily twisted in a predetermined direction and thereby each second strand is formed. The first strands include glass filaments as reinforcing fibers. The first direction is either an S direction or a Z direction.

Next, a cord is formed that includes: a plurality of second strands that have been twisted together in the same direction as the first direction; and an unsolidified treatment agent that has been applied to the second strands. That is, the plurality of second strands are finally twisted in the same direction as that of the primary twist. This cord may be formed by twisting the plurality of second strands together in the same direction as the first direction and then applying the unsolidified treatment agent thereto. Furthermore, this cord may be formed by twisting the plurality of second strands together, to which the unsolidified treatment agent has been applied, in the same direction as the first direction.

Next, the second strands are bonded to each other by solidifying the treatment agent, with a tensile load of 40 to 800 N per 1 mm² of the sectional area of the glass filaments being applied to the cord.

Glass fiber strands are used for the first strands. The reinforcing fibers included in the first strands typically are formed of glass fibers but may include fibers formed of another material as long as the effects of the present invention can be obtained. The reinforcing cord of the present invention also may include fiber strands made of a material other than the glass fiber in addition to the first strands (glass fiber strands). For instance, the reinforcing cord of the present invention may be a hybrid cord in which a strand made of aramid fibers, PBO (polyparaphenylene benzobisoxazole) fibers, or carbon fibers is positioned in the core part thereof and a plurality of glass fiber strands are arranged therearound. In this case, the present invention is applied to the part of the plurality of glass fiber strands.

Examples of the glass fibers to be used for the glass fiber strands include E-glass filaments and high-strength glass filaments. There are no particular limitations in the diameter of the glass filaments and the number of the glass filaments that form the glass fibers. A reinforcing cord with particularly high flexibility can be obtained through the use of glass fiber strands that are formed by bundling and primarily twisting 100 to 2400 glass filaments having a diameter of 5 to 11 µm and that have a linear density of 5 to 640 g/1000 m.

The manufacturing method of the present invention may include a step of coating the glass filaments of the first strands with a pretreatment agent. In this case, it is preferable that the solid-content weight of the pretreatment agent be in the range of 5.0 to 35.0% of the total of the weight of the glass filaments and the solid-content weight of the pretreatment agent.

Generally, a pretreatment agent (an adhesive) is applied to the glass filaments that form the first strands in order to improve heat resistance, water resistance, and adhesiveness and to prevent fraying. However, the treatment to be carried out using the pretreatment agent can be omitted. The pretreatment agent (the adhesive) is not particularly limited but can be a resorcinol-formalin-rubber latex mixture (hereinafter also referred to as an "RFL treatment solution"), an epoxy compound, or an isocyanate compound, for example. Examples of the rubber latex to be used for the RFL treatment solution include an acrylic-rubber-based latex, an urethane-based latex, a styrene-butadiene-rubber-based latex, a nitrile-rubber-based latex, a chlorosulfonated-polyethylene-based latex, denatured latexes thereof, mixtures thereof, etc. An example of preferable pretreatment agents contains a water-soluble condensate of resorcinol-formaldehyde, a carboxylated vinylpyridine-butadiene-styrene copolymer latex, a dicarboxylated butadiene-styrene copolymer latex, and a chlorosulfonated polyethylene latex whose ratios expressed in solid-content ratio are 2 to 15 wt%, 15 to 80 wt%, 7 to 50 wt%, and 10 to 60 wt%, respectively.

Generally, when the number of primary twists that are given to the first strands increases, the dimensional stability deteriorates but the bending fatigue resistance improves. On the other hand, when the number of twists is reduced, the dimensional stability improves but the bending fatigue resistance deteriorates. The number of primary twists of the first strands therefore is preferably 0.5 to 9.0 times/25 mm (i.e. 0.5 to 9.0 times per 25 mm), more preferably 1.0 to 4.0 times/25 mm. A plurality (preferably 2 to 24) of first strands are bundled and primarily twisted to form each second strand. The linear density (tex) of the second strand is usually in the range of 5 to 640 g/1000 m.

A plurality of second strands are bundled and finally are twisted in the same direction as that of the primary twist. That is, when the direction of the primary twist is the S direction, the direction of the final twist also is the S direction while when the direction of the primary twist is the Z direction, the direction of the final twist also is the Z direction.

The number of final twists is preferably 0.5 to 9.0 times/25 mm, more preferably 1.0 to 4.0 times/25 mm for the same reason as that described with respect to the primary twist. That is, preferably, the plurality of first strands are twisted together at a rate of 0.5 to 9.0 times/25 mm and the plurality of second strands are twisted together at a rate of 0.5 to 9.0 times/25 mm.

The plurality (preferably 3 to 30) of second strands are finally twisted to form a cord. The linear density (tex) of the twisted cord thus obtained is usually in the range of 15 to 6000 g/1000 m.

The device for doubling fiber strands and the device for twisting them are not particularly limited. For example, a ring twisting frame, a flyer twisting frame, or a twisting machine can be used.

In the present invention, a treatment agent to be used for securely bonding the second strands to each other is applied to the second strands. A tensile load is applied to the cord, in the direction of the length thereof, that is formed of the plurality of second strands that finally have been twisted after the treatment agent had been applied thereto. When a tensile load is applied to the cord in the direction of the length thereof, the respective strands that form the cord and the respective filaments that form them are arranged in an orderly manner. This brings the cord into a state free from untwisting or spontaneous entanglement. When the treatment agent is solidified in such a state, they are fixed in the orderly arranged state. After that, the filaments and strands are prevented from being displaced even when the tensile road is released. As a result, the arrangement of the filaments and strands is not disordered and thus the cord is not untwisted or entangled spontaneously. When the second strands are finally twisted in the same direction as that of the primary twist without being subjected to any treatments, the cord tends to be untwisted or entangled. In the present invention, however, the treatment agent is solidified, with a predetermined tensile load being applied to the cord to which an unsolidified treatment agent has been applied after it had been twisted in the Lang's lay manner. As described above, when the treatment agent is solidified, with the cord being maintained in the twisted state, the occurrence of untwisting and entanglement can be prevented.

The tensile load may be applied not only in the step where the treatment agent applied to the fiber cord is solidified but also in the step before that. For instance, the application of the tensile load may be continued throughout from the step of aligning and finally twisting a plurality of second strands or from the step of applying the treatment agent to the second strands that have been finally twisted.

Even when the reinforcing cord for rubber reinforcement of the present invention is embedded in a rubber composition and then is heated and compressed in manufacturing a rubber product such as a rubber belt, the filaments and strands are not displaced and therefore the cord is not untwisted or entangled spontaneously.

On the other hand, when the treatment agent is applied to the cord and then is solidified, with no tensile load or a tensile load that is lower than 40 N/mm² being applied thereto, the respective strands that form the cord and the respective filaments that form them are not arranged neatly enough. As a result, they are fixed in the state where the cord has been untwisted or entangled spontaneously.

The effects of the present invention cannot be obtained if the tensile load is not applied to the fiber cord in solidifying the treatment agent even when it is applied thereto before and during the application of the treatment agent. Furthermore, when the tensile load is applied to the cord only after the treatment agent has solidified, the effects of the present invention also cannot be obtained. This is because the treatment agent prevents the respective strands and the respective filaments that form them from being arranged in an orderly manner. When the tensile load is applied in aligning the plurality of second strands with one another before they are finally twisted and when it is applied in finally twisting them after they are aligned with one another, some effect can be obtained.

The tensile load to be applied to the cord, i.e. an external tensile stress per cord is selected from the range lower than the tensile strength of the cord. The higher the tensile load, the more uniform the arrangement of the respective strands that form the cord and thus the better the characteristics such as the bending fatigue resistance and tensile strength. Accordingly, the tensile load (i.e. the external tensile stress) to be applied to the cord is 40 to 800 N per unit sectional area (1 mm²) of the glass filaments in the cross-section of the cord. In this specification, the tensile load per 1 mm² of the sectional area of the glass filaments is expressed with a unit of N/mm².

When the tensile load is lower than 40 N/mm², the effect is not obtained sufficiently. On the other hand, a tensile load higher than 800 N/mm² can cause a problem that a heavier burden is imposed on manufacturing facilities. More preferably, the tensile load is in the range of 50 to 500 N/mm². Specifically, it is preferably in the range of 50 to 300 N/mm² in the case of a cord to be produced using filaments having an E-glass composition, while it is preferably in the range of 50 to 500 N/mm² in the case of a cord to be produced using filaments having a high-strength glass composition. The sectional area of the glass filaments in the cross-section of a cord is calculated from the diameter and the number of the glass filaments that form the cord.

Examples of the method in which the treatment agent is applied to the second strands and then is solidified with a tensile load being applied include the following two methods:
(1) First, a plurality of second strands are finally twisted and thereby a cord is produced, which then is taken up onto a bobbin. Subsequently, the cord is drawn out continuously from the bobbin and is allowed to pass through a bath so as to be immersed in a treatment agent contained in the bath. Thus the treatment agent is applied to the cord. Next, the cord is allowed to pass through a drying furnace and thereby the treatment agent is dried and solidified. The cord then is taken up onto a bobbin. In this stage, a pair of drive rolls is disposed before and after the drying furnace and the number of rotations of one of the drive rolls is controlled so that a predetermined tensile load is applied to the cord as it passes through the drying furnace. In this case, a predetermined tensile load may be applied to the fiber cord from the step of applying the treatment agent through to the step of drying and solidifying it or from the step of drawing out the cord through to the step of taking up the cord.
(2) First, the second strands are finally twisted with a final-twisting machine and thereby a cord is formed continuously. This cord then is allowed to pass through a bath so as to be immersed in a treatment agent contained in the bath as in the method (1) described above. Next, the cord is allowed to pass through a drying furnace and thereby the treatment agent is dried and solidified. Then the cord is taken up onto a bobbin. In this stage, a predetermined tensile load is applied, in the same manner as in the method (1) described above, to the cord that passes through the drying furnace.

A preferable treatment agent to be applied to the second strands is one that can bond the strands of the cord firmly together. The treatment agent to be used herein can be any well-known adhesives such as an RFL treatment solution, an epoxy compound, an isocyanate compound, etc. Preferably, this treatment agent is selected according to the kind of the rubber matrix of a rubber product in which the reinforcing cord will be embedded. Among such treatment agents, a treatment agent including a halogen-containing polymer adhesive is preferable due to its high adhesiveness to hydrogenated nitrile rubber. The halogen-containing polymer adhesive to be used preferably can be one containing organic diisocyanate, chlorosulfonated polyethylene, and an aromatic nitroso-compound. A preferable example of this adhesive contains the following components, expressed in solid-content weight: 10 to 50 wt% of organic diisocyanate; 10 to 60 wt% of chlorosulfonated polyethylene; and 1 to 20 wt% of aromatic nitroso-compound. For the halogen-containing polymer adhesive, one that is commercially available, for instance, "Chemlock 402" (Trade Name) manufactured by Lord Corporation can be used.

Preferably, the solid-content weight of the treatment agent to be applied to the second strands is in the range of 1.0 to 15.0% of the total of the weight of the second strands and the solid-content weight of the treatment agent.

The method of solidifying the treatment agent is selected according to the kind of the treatment agent to be used. Generally, the treatment agent is solidified through the removal of a solvent by drying or through a heat treatment.

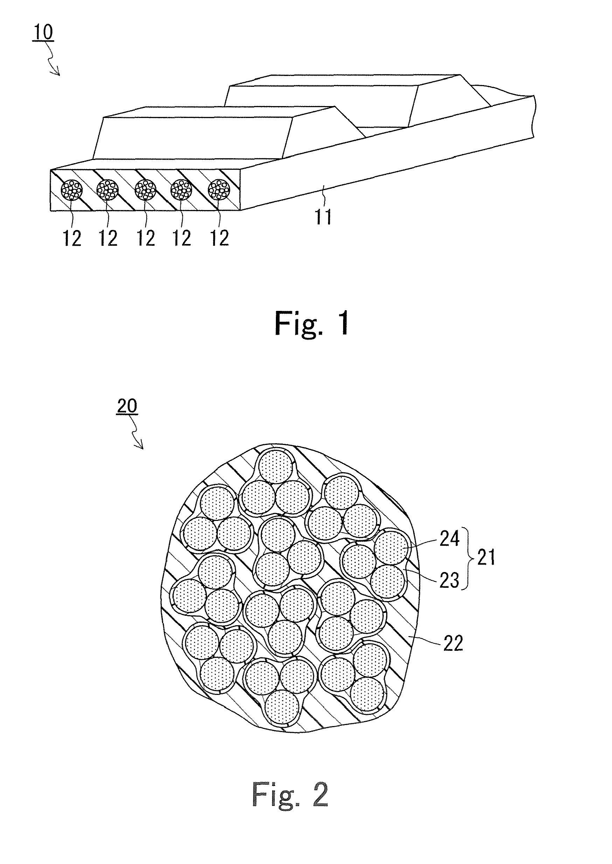

The rubber product of the present invention is a product that includes rubber as its main composition material. It is reinforced with a reinforcing cord for rubber reinforcement of the present invention. The rubber product of the present invention is not particularly limited but can be a rubber belt or a rubber tire, for example. FIG. 1 schematically shows the perspective view of an example of toothed belt. A toothed belt 10 includes a main body 11 and a plurality of cords 12 embedded in the main body 11. The main body 11 is formed of rubber or rubber and other materials. The cords 12 each are a reinforcing cord of the present invention. For the part other than the cords 12, a well-known member can be used.

### EXAMPLES

Hereinafter, the present invention is described further in detail using

### examples.

### Example 1

First, 200 glass filaments (with a diameter of 9 µm) having an E-glass composition were bundled and thereby a first strand was produced. Next, three first strands were bundled to form a strand with an outer diameter of about 0.15 mm. This was immersed in an RFL treatment solution and then was dried in a drying furnace. Thus a strand of about 130 tex (with a tensile strength of 80 N/strand) was formed. In this case, the amount of the RFL treatment solution to stay in the strand was set at 20 wt% in terms of the solid-content weight. The RFL treatment solution used herein was a mixture of 30 weight parts of water-soluble condensate of resorcinol-formaldehyde (resolcinol : formaldehyde = 1 : 1.5; with a solid content of 8 wt%), 30 weight parts of vinylpyridine-butadiene-styrene terpolymer latex (Nipol 2518FS, manufactured by ZEON CORPORATION; with a solid content of 40 wt%), 35 weight parts of highly saturated polymer rubber latex containing a nitrile group (Zetpol Latex 2020, manufactured by ZEON CORPORATION; with an iodine value of 28 and a solid content of 40 wt%), 1 weight part of 25% ammonia solution, and 4 weight parts of water.

Subsequently, the above-mentioned strands were primarily twisted in the Z direction at a rate of 2.0 times/25 mm. Thus a second strand was obtained.

Next, 11 second strands were aligned with one another and then were finally twisted in the Z direction at a rate of 2.0 times/25 mm. Thus, a cord was produced. Subsequently, a treatment agent including a halogen-containing polymer treatment agent was applied to the cord, with a tensile load of 50 N/mm² being applied thereto. Thereafter, the cord was dried in a drying furnace, with the above-mentioned tensile load being applied thereto. Thus a reinforcing cord (with a linear density of 1440 g/1000 m) of Example 1 was obtained. The treatment agent used herein was one obtained by diluting "Chemlock 402" (Trade Name, manufactured by Lord Corporation; with a solid content of 14.5 wt%) with toluene. The amount of the treatment agent that stayed in the cord was 3.5 wt% (in solid content). Furthermore, the drying was carried out at 80 to 150°C for about one minute. The tensile load was applied with a roll located on the feeding side and a roll located on the take-up side.

FIG. 2 schematically shows a cross-sectional view of the reinforcing cord thus obtained. The reinforcing cord 20 is composed of 11 second strands 21 that have been twisted together and the treatment agent 22 that has been solidified. The second strands 21 each are formed of three first strands 24 that have been twisted together and have been bonded to each other with a pretreatment agent 23. The tensile strength of the reinforcing cord of Example 1 was measured. As a result, the tensile strength per cord was 880 N.

The reinforcing cord of Example 1 was cut and then the degree of untwisting thereof was evaluated. Specifically, the diameter (the greater diameter) of the cross-section of the cord was measured before the cord was cut and when five minutes elapsed after cutting. As a result, the diameter of the cord remained unchanged after cutting as compared to the diameter before cutting and was 1.02 mm. Thus untwisting hardly occurred.

Next, the characteristics of the reinforcing cord for rubber reinforcement were checked by the following method. First, one reinforcing cord for rubber reinforcement with a length of 300 mm was placed on a sheet (with a width of 10 mm, a length of 300 mm, and a thickness of 1 mm) of rubber matrix formed of the compositions indicated in Table 1. A rubber matrix sheet identical to the above then was placed thereon. Thereafter, this layered product was pressed from the upper and lower sides thereof at 150°C for 20 minutes to be cured. Thus a belt-shaped specimen was produced.

**Table 1**

| Components | Quantity (Weight Part) |
|---|---|
| Hydrogenated Acrylonitrile-Butadiene Rubber (Zetpol 2020, manufactured by ZEON CORPORATION) | 100 |
| Zinc Oxide, Grade 1 | 5 |
| Stearic Acid | 1.0 |
| HAF Carbon | 60 |
| Trioctyl Trimellitate | 10 |
| 4,4-(α,α-dimethylbenzyl)diphenylamine | 1.5 |
| 2-mercaptobenzimidazole Zinc Salt | 1.5 |
| Sulfur | 0.5 |
| Tetramethylthiuramsulfide | 1.5 |
| Cyclohexyl-Benzothiazylsulfenamide | 1.0 |

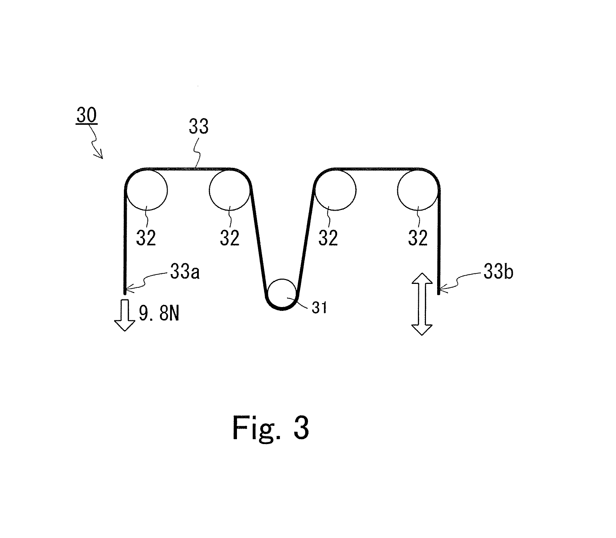

Next, as shown in FIG. 3, this specimen (a specimen 33) was set on a bending tester 30 that was provided with one flat pulley 31 having a diameter of 25 mm, a motor (not shown in FIG. 3), and four guide pulleys 32. Then a weight was put to one end 33a of the specimen 33 to apply an initial tension of 9.8N to the specimen 33. In this state, the other end 33b of the specimen 33 was reciprocated for a distance of 10 cm in the directions indicated with a double-headed arrow in FIG. 3, by the motor. Thus the specimen 33 was bent repeatedly around the flat pulley 31.

After the specimen 33 was reciprocated 10,000 times at room temperature, the tensile strength was measured after the bending test in order to evaluate the bending fatigue resistance. The ratio of the tensile strength (per cord) obtained after the bending test to the tensile strength (per cord) obtained before the bending test was calculated as a tensile-strength retention rate (%). The higher the tensile-strength retention rate, the better the bending fatigue resistance. The reinforcing cord of Example 1 had a tensile-strength retention rate of 97% after the bending test.

### Example 2

A reinforcing cord for rubber reinforcement was produced in the same manner as in Example 1 except that the tensile load applied when the treatment agent was applied to the second strands and then was dried was changed to 250 N/mm². Thereafter, with respect to the reinforcing cord thus obtained, the tensile strength thereof was measured, a belt-shaped specimen was produced, and the tensile-strength retention rate was determined, in the same manner as in Example 1.

Furthermore, with the reinforcing cord of Example 2, the diameter (the greater diameter) of the cut surface thereof was measured and thereby the degree of untwisting was evaluated in the same manner as in Example 1. As a result, the diameter of the cord remained unchanged after cutting as compared to the diameter before cutting and was 0.98 mm. Thus untwisting hardly occurred.

### Comparative Example 1

A reinforcing cord for rubber reinforcement was produced in the same manner as in Example 1 except that the treatment agent was not applied to the second strands. Then, with respect to the reinforcing cord thus obtained, the tensile strength thereof was measured, a belt-shaped specimen was produced, and the tensile-strength retention rate was determined, in the same manner as in Example 1.

Furthermore, with the reinforcing cord of Comparative Example 1, the diameter (the greater diameter) of the cut surface thereof was measured and thereby the degree of untwisting was evaluated in the same manner as in Example 1. As a result, the diameter of the cord was 1.00 mm before cutting and was 1.56 mm after cutting. Thus, the reinforcing cord of Comparative Example 1 was untwisted considerably.

### Comparative Example 2

A reinforcing cord for rubber reinforcement was produced in the same manner as in Example 1 except that the direction in which three first strands were primarily twisted was changed to the S direction. Then, with respect to the reinforcing cord thus obtained, the tensile strength thereof was measured, a belt-shaped specimen was produced, and the tensile-strength retention rate was determined, in the same manner as in Example 1.

Furthermore, with the reinforcing cord of Comparative Example 2, the diameter (the greater diameter) of the cut surface thereof was measured and thereby the degree of untwisting was evaluated in the same manner as in Example 1. As a result, the diameter of the cord remained unchanged after cutting as compared to the diameter before cutting and was 1.05 mm. Thus untwisting hardly occurred.

### Comparative Example 3

A reinforcing cord for rubber reinforcement was produced in the same manner as in Example 1 except that the direction in which three first strands were primarily twisted was changed to the S direction and the treatment agent was not applied to the second strands. Then, with respect to the reinforcing cord thus obtained, the tensile strength thereof was measured, a belt-shaped specimen was produced, and the tensile-strength retention rate was determined, in the same manner as in Example 1.

Furthermore, with the reinforcing cord of Comparative Example 3, the diameter (the greater diameter) of the cut surface thereof was measured and thereby the degree of untwisting was evaluated in the same manner as in Example 1. As a result, the diameter of the cord was 0.98 mm before cutting and was 1.00 mm after cutting. Thus, the reinforcing cord of Comparative Example 3 was untwisted slightly.

### Comparative Example 4

A reinforcing cord for rubber reinforcement was produced in the same manner as in Example 1 except that the tensile lord applied when the treatment agent was applied to the second strands and then was dried was changed to 30 N/mm². Thereafter, with respect to the reinforcing cord thus obtained, the tensile strength thereof was measured, a belt-shaped specimen was produced, and the tensile-strength retention rate was determined, in the same manner as in Example 1.

Furthermore, with the reinforcing cord of Comparative Example 4, the diameter (the greater diameter) of the cut surface thereof was measured and thereby the degree of untwisting was evaluated in the same manner as in Example 1. As a result, the diameter of the cord remained unchanged after cutting as compared to the diameter before cutting and was 1.05 mm. Thus untwisting hardly occurred.

Table 2 indicates the configurations and evaluation results with respect to the reinforcing cords of Examples 1 and 2 as well as Comparative Examples 1 to 4.

**Table 2**

| | Primary Twist / Final Twist | Coated with Treatment Agent? | Tensile Load (N/mm²) | Linear Density (g/1000m) | Initial Tensile Strength (N/cord) | Tensile-Strength Retention Rate (%) |
|---|---|---|---|---|---|---|
| Ex. 1 | Z/Z | Yes | 50 | 1440 | 880 | 97 |
| Ex. 2 | Z/Z | Yes | 250 | 1440 | 930 | 99.5 |
| C. Ex. 1 | Z/Z | No | 50 | 1400 | 870 | 92 |
| C. Ex. 2 | S/Z | Yes | 50 | 1420 | 890 | 51 |
| C. Ex. 3 | S/Z | No | 50 | 1400 | 880 | 48 |
| C. Ex. 4 | Z/Z | Yes | 30 | 1400 | 850 | 95 |

The reinforcing cords of Examples 1 and 2 each had high initial tensile strength, specifically 880 to 930 N/cord while also having a high tensile-strength retention rate after the bending test, specifically 97 to 99.5%. On the other hand, the reinforcing cords of Comparative Examples 2 and 3 in which the direction of the primary twist was different from that of the final twist had high initial tensile strength, specifically 880 to 890 N/cord but had a lower tensile-strength retention rate after the bending test, specifically 48 to 51%. Moreover, the reinforcing cord of Comparative Example 4 that was produced with the tensile load applied during the application and drying of the treatment agent being set at 30 N/mm² had a high tensile-strength retention rate after the bending test, specifically 95% but had lower initial tensile strength, specifically 850 N/cord. In addition, the reinforcing cord of Comparative Example 1 in which the treatment agent was not applied had high initial tensile strength, specifically 870 N/cord but had a lower tensile-strength retention rate after the bending test as compared to those of the cords according to Examples 1 and 2.

### Industrial Applicability

The present invention can be applied to a reinforcing cord for rubber reinforcement, a method of manufacturing the same, and a rubber product including the same.

## Claims

1. A method of manufacturing a reinforcing cord for rubber reinforcement, the method comprising:
(i) forming second strands, each of which is formed by twisting a plurality of first strands together in a first direction, the plurality of first strands including glass filaments as reinforcing fibers;
(ii) forming a cord including a plurality of said second strands and a treatment agent that has been applied to the second strands, the plurality of said second strands having been twisted together in the same direction as the first direction; and
(iii) bonding the second strands to each other by solidifying the treatment agent, with a tensile load of 40 to 800 N per 1 mm² of a sectional area of the glass filaments being applied to the cord.

2. The manufacturing method according to claim 1, wherein the cord is formed by applying the treatment agent after the plurality of said second strands are twisted together in the same direction as the first direction.

3. The manufacturing method according to claim 1, wherein the treatment agent has a solid-content weight in a range of 1.0% to 15.0% of the total of a weight of the second strands and the solid-content weight of the treatment agent.

4. The manufacturing method according to claim 1, further comprising coating the glass filaments of the first strands with a pretreatment agent,
wherein the pretreatment agent has a solid-content weight in a range of 5.0% to 35.0% of the total of a weight of the glass filaments and the solid-content weight of the pretreatment agent.

5. The manufacturing method according to claim 1, wherein the plurality of first strands are twisted together at a rate of 0.5 to 9.0 times/25 mm and the plurality of said second strands are twisted together at a rate of 0.5 to 9.0 times/25 mm.

6. A reinforcing cord for rubber reinforcement manufactured by a manufacturing method according to claim 1.

7. A rubber product reinforced with a reinforcing cord for rubber reinforcement according to claim 6.

8. The rubber product according to claim 7, which is a rubber belt.

9. The rubber product according to claim 7, which is a rubber tire.
